# EUROPÄISCHE PATENTANMELDUNG

(11) **EP 2 455 737 A1**
(43) Veröffentlichungstag der Anmeldung: **23.05.2012**
(21) Anmeldenummer: 10014707.3
(22) Anmeldetag: 17.11.2010
(51) Int. Cl.: G01L 9/00, G01L 19/06, G01L 19/14

(54) **Sensor mit Keramikzelle**

(71) Anmelder: Baumer Innotec AG, 8500 Frauenfeld (CH)
(72) Erfinder: Tarraf, Amer, 8280 Kreuzlingen (CH); Züllig, Daniel, 8500 Frauenfeld (CH); Nigg, Markus, 8500 Frauenfeld (CH); Brönnimann, Stefan, 8370 Simach (CH)
(74) Vertreter: Strauss, Steffen

(57) **Zusammenfassung**

Die vorliegende Erfindung betrifft einen Sensor, insbesondere einen Drucksensor, für ein Fluid mit einem Gehäuseelement und einem Zellenelement, dessen Material vorzugsweise Keramik umfasst; und wenigstens einer Versiegelung zum fluiddichten Verbinden des Zellenelements mit dem Gehäuseelement des Sensors. Die Erfindung betrifft weiterhin ein Verfahren zur Herstellung eines Sensors, insbesondere eines Drucksensors, für ein Fluid, mit den Schritten: Sintern einer keramischen Zelle mit einer Membran; und fluiddichtes Versiegeln der Zelle mit einem Gehäuseelement des Sensors.

## Beschreibung

### Gebiet der Erfindung

Die vorliegende Erfindung betrifft einen Sensor, insbesondere Drucksensor, für ein Fluid. Die Erfindung betrifft weiterhin ein Verfahren zur Herstellung eines Sensors, insbesondere eines Drucksensors, für ein Fluid.

### Stand der Technik

Drucksensoren zur Messung von Drücken in Fluiden, also von Gasen oder Flüssigkeiten sowie viskosen Lösungen und Materialien (wie z.B. Öl, Honig, Sirup, Kaffeesahne, Wurstmasse, Schokoladenmasse, Teig), sind in verschiedenen Ausführungen bekannt. Beispielsweise existieren kapazitive Drucksensoren, die einen Kondensator oder mehrere Kondensatoren enthalten. Bei Druckbeaufschlagung werden die Abstände einer Membran zu zwei beidseitig gegenüberliegenden Kondensatorplatten verändert, wodurch sich auch die Dehnkapazität der Kondensatoren verändert, was ein Maß für den Druck darstellt. Der oder die Kondensatoren können Teil eines Verstärkers sein dessen Ausgangssignal von der Kapazität abhängig ist.

Für hygienische Anwendungen z. B. im Pharmabereich, in der Lebensmittelindustrie oder in der Getränkeindustrie werden hohe Anforderungen an die Sterilität gesetzt. Weil die herkömmlichen Drucksensoren jedoch zur Abdichtung der Membranen oder der Druckzellen gummiartige oder allgemein elastische Dichtungen aufweisen, sind diese für solche Zwecke und Anwendungen nicht geeignet und deshalb nachteilig, weil sich beispielsweise Bakterien und Keime in derartigen Dichtungen einnisten können. Ferner sind fluidseitige Todräume des Sensors nachteilig, da sich auch darin Ablagerungen und insbesondere Keime ausbilden können.

### Beschreibung der Erfindung

Der vorliegenden Erfindung liegt gegenüber dem Stand der Technik die Aufgabe zugrunde, einen Sensor, insbesondere einen Drucksensor zur Verfügung zu stellen, der die oben genannten Nachteile überwindet und beispielsweise für hygienische Anwendungen geeignet ist.

Die oben genannte Aufgabe wird durch einen Sensor, insbesondere einen Drucksensor gemäß Patentanspruch 1 gelöst.

Der erfindungsgemäße Sensor für ein Fluid (insbesondere für Flüssigkeiten, Gase und viskose Fluide) weist ein Gehäuseelement, ein Zellenelement, deren Material vorzugsweise Keramik umfasst, und wenigstens eine Versiegelung zum fluiddichten Verbinden der Zelle mit dem Gehäuseelement des Sensors auf. Mit fluiddicht ist insbesondere flüssigkeitsdicht und/oder gasdicht und/oder dicht für das viskose Fluid gemeint bzw. allgemein hermetisch dicht. Durch die Verwendung einer Versiegelung wird das Zellenelement mit dem Sensorgehäuse fluiddicht verbunden, ohne dass eine elastische Dichtung, wie beispielsweise eine Gummidichtung, erforderlich ist. In einer beispielhaften Ausführung kann das Zellenelement Keramikmaterial umfasssen.

Eine Weiterbildung des erfindungsgemäßen Sensors besteht darin, dass das Zellenelement eine keramische Membran umfassen kann. Die Membran besteht somit aus einem für hygienische Zwecke geeigneten Material und die druckabhängige Wölbung dieser keramischen Membran kann ausgenutzt werden, um Drücke zu messen.

Gemäß einer anderen Weiterbildung kann das Zellenelement wenigstens eine Halterung zum Haltern der Membran umfassen, wobei die wenigstens eine Versiegelung die wenigstens eine Halterung mit dem Gehäuseelement des Sensors dicht verbindet. Mit einer solchen Halterung kann die Membran in einer gewünschten Position am Sensorgehäuseelement befestigt werden.

Eine andere Weiterbildung besteht darin, dass die wenigstens eine Halterung vorzugsweise aus dem gleichen Material und/oder einstückig mit der Membran ausgebildet sein kann. Auf diese Weise kann die Membran und die Halterung im gleichen Herstellungsprozess monolithisch erhalten werden.

Eine andere Weiterbildung besteht darin, dass eine Seite der Membran mit einer ersten Kondensatorelektrode versehen sein kann. Dies hat den Vorteil, dass die (keramische) Membran und die eine Kondensatorelektrode eine Einheit bilden, wodurch eine einfache Ausführung des Kondensators ermöglicht wird. Dabei kann diese eine Kondensatorelektrode als metallische Schicht auf einer der Seiten der Membran ausgebildet sein.

Eine andere Weiterbildung des Sensors besteht darin, dass die wenigstens eine Versiegelung eine metallische Schicht, insbesondere Lot und/oder einen Keramikkleber und/oder einen durch UV-Licht härtbaren Kleber und/oder einen Glaskleber umfassen kann. Auf diese Weise werden fluiddichte Verbindungen zwischen der Zelle und dem Sensorgehäuse ohne die Verwendung von Gummidichtungen ermöglicht.

Gemäß einer anderen Weiterbildung kann die Membran aus Hochtemperatur-Mehrlagenkeramik (HTCC) gefertigt sein. Dieses Material ist für die Verwendung als Sensormembran gut geeignet, da sich Mehrlagenschaltungen auf der Basis von gesinterten Keramikträgern mit Leiterbahnen erzeugen lassen.

Eine andere Weiterbildung besteht darin, dass das Gehäuse einen Abschnitt zum Verbinden mit der Zelle aufweisen kann, deren Material Kovar umfasst. Da Kovar einen geringen Wärmeausdehnungskoeffizienten hat, der insbesondere geringer als der Wärmeausdehnungskoeffizienten typischer Metalle ist, können spannungsfreie Verbindungen zwischen der Membran bzw. der Halterung der Membran und dem Befestigungsabschnitt an dem Sensorgehäuse ausgeführt werden.

Gemäß einer anderen Weiterbildung des erfindungsgemäßen Sensors oder einer seiner Weiterbildungen, können die fluidseitigen Begrenzungen der Zelle abgerundet und/oder abgeschrägt sein, so dass beispielsweise ein Fluid-Strömungswiderstand der Zelle vermindert wird.

Eine andere Weiterbildung besteht darin, dass eine zweite Kondensatorelektrode in einem fluidabgewandten Bereich der Zelle bzw. auf einer fluidabgewandten Seite der Membran angeordnet ist.

Eine andere Weiterbildung besteht darin, dass die wenigstens eine zweite Kondensatorelektrode auf einem Trägerelement angeordnet ist. Auf diese Weise kann die zweite Kondensatorelektrode z.B. bezogen auf einen drucklosen Zustand des Sensors in einem vorbestimmten Abstand zur ersten Kondensatorelektrode angeordnet werden.

Gemäß einer anderen Weiterbildung des erfindungsgemäßen Sensors oder einer seiner Weiterbildungen ist das Zellenelement relativ zum Gehäuseelement frontbündig angeordnet. Auf diese Weise kann insbesondere die Membran mit der fluidseitigen Begrenzung des Gehäuseelements ausgerichtet sein, um z.B. den .Fluid-Strömungswiderstand zu vermindern.

Gemäß einer anderen Weiterbildung des erfindungsgemäßen Sensors oder einer seiner Weiterbildungen kann das Gehäuseelement eine Befestigungsvorrichtung aufweisen, mit der es an ein weiteres Gehäuseelement befestigt werden kann, z.B. ein Gewinde, welches in ein weiteres Gewinde des weiteren Gehäuseelements schraubbar ist.

Gemäß eine anderen Weiterbildung kann das Trägerelement ein Außengewinde aufweisen, welches in ein Gewinde des Gehäuseelements und/oder des Zellenelements einschraubbar ist und/oder wobei Abstandselemente zwischen dem Trägerelement und der Membran vorgesehen sind.

Die oben genannte Aufgabe wird weiterhin durch ein Verfahren zur Herstellung eines Sensors, insbesondere eines Drucksensors, für ein Fluid, nach Patentanspruch 12 gelöst. Das Verfahren umfasst die folgenden Schritte: Sintern eines keramischen Zellenelements mit einer Membran; und fluiddichtes Versiegeln des Zellenelements mit einem Gehäuseelement des Sensors.

In einer Weiterbildung des Verfahrens kann die Membran auf einer Seite mit einer metallischen Schicht zur Ausbildung einer Elektrode gesintert und/oder metallisiert werden.

Gemäß einer anderen Weiterbildung kann das Verfahren den weiteren Schritt umfassen: Positionieren eines Trägerelements mit wenigstens einer Gegenelektrode relativ zur Membran, wobei das Positionieren vorzugsweise durch Einschrauben des Trägerelements in wenigstens eine Halterung oder durch Vorsehen von Abstandselementen zwischen dem Trägerelement und der Membran erfolgt.

Gemäß einer anderen Weiterbildung kann das Verfahren den weiteren Schritt umfassen: Anordnen des Zellenelements so, dass eine fluidseitige Begrenzung des Zellenelements frontbündig mit dem Gehäuseelement ist

In einer anderen Weiterbildung kann das Versiegeln mittels Schweißen und/der Löten und/oder Kleben, erfolgen, wobei das Versiegeln insbesondere ohne Anbringen einer Gummidichtung erfolgt.

Weitere Merkmale und Vorteile der vorliegenden Erfindung werden im Weiteren mit Bezug auf die Figuren beschrieben, die lediglich beispielhafte Ausführungsformen veranschaulichen und durchaus nicht den gesamten Umfang der Erfindung darstellen. Es versteht sich, dass die gezeigten Merkmale in anderen Kombinationen, als in den Beispielen beschrieben, im Rahmen der Erfindung Verwendung finden können.

### Kurzbeschreibung der Zeichnungen

Fig. 1 zeigt eine erste Ausführungsform des erfindungsgemäßen Sensors.
Fig. 2 zeigt eine zweite Ausführungsform des erfindungsgemäßen Sensors.
Fig. 3a zeigt eine Detaildarstellung der zweiten Ausführungsform des erfindungsgemäßen Sensors.
Fig. 3b zeigt eine Modifikation des Sensors gemäß Fig. 3a.
Fig. 4 zeigt eine dritte Ausführungsform des erfindungsgemäßen Sensors.
Fig. 5 zeigt eine vierte Ausführungsform des erfindungsgemäßen Sensors.

### Beschreibung der Ausführungsformen

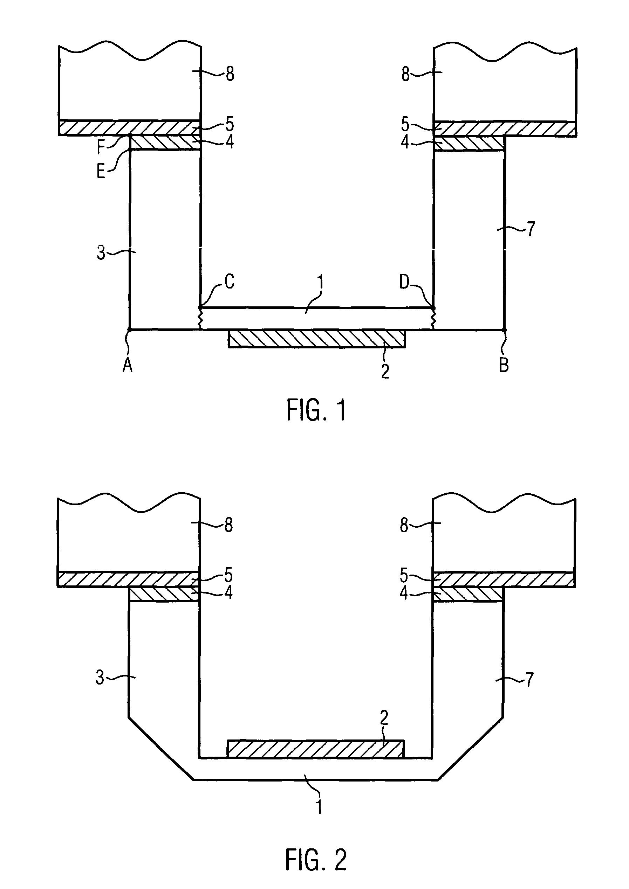

Figur 1 zeigt eine erste Ausführungsform des erfindungsgemäßen Sensors. Der Sensor umfasst ein Zellenelement welches aus einer Membran 1 und Halterungen 3 und 7 besteht, welche aus Keramikmaterial hergestellt sind. Vorzugsweise ist die Membran 1 und die Halterung 3 und 7 einstückig ausgebildet. Insbesondere können z. B. auch die Halterungen 3 und 7 als ein Ring ausgeführt sein. Die Halterungen 3 und 7 entstehen in demselben und/oder in einem separaten Herstellungsprozess wie die Membran 1. Die Halterungen 3 und 7 können je nach Herstellungsprozess aus gleichem Material wie die Membran 1 sein, können jedoch auch aus verschiedenem Material ausgebildet sein.

Die Membran ist vorzugsweise zwischen 200 µm und 500 µm dick. Die Höhe der Halterungen 3 und 7 zwischen den Punkten A und E beträgt vorzugsweise 1,5 bis 3 mm. Die Länge der Anordnung zwischen den Punkten A und B beträgt vorzugsweise 10 bis 40 mm. Die Länge der Membran 1 zwischen den Punkten C und D beträgt vorzugsweise 10 bis 30 mm. Die Membran ist vorzugsweise aus einer Hochtemperatur-Mehrlagenkeramik HTCC gefertigt. Auf diese Weise kann eine monolithische Herstellung der gesamten Sensorzelle ermöglicht werden. Die Zelle weist ferner eine Metallschicht 2 auf, welche beispielsweise ebenfalls in dem Sinterprozess zur Herstellung der Keramik hergestellt wird. Die Herstellung der Metallschicht 2 kann ferner oder alternativ beispielsweise auch durch Galvanisieren oder Sputtern erfolgen. Die Dicke der Metallschicht 2 beträgt vorzugsweise 10 bis 30 µm und ist vorzugsweise aus Metallen, welche den Sinterungsprozess überstehen können, wie z. B. Molybdän. Die Schicht 2 kann weiterhin poliert werden, und sie bildet eine Elektrode eines Kondensators zur Messung des Drucks. Ferner kann die Anordnung der Zelle an den Halterungen 3 und 7 vorzugsweise mit einer Cu/Ag-Mischung metallisiert werden. Diese Metallisierung 4 kann die Rolle eines Lots übernehmen. Daran kann ein metallischer Gegenstand wie beispielsweise die Scheibe 5 angebracht werden, wobei diese beispielsweise mittels eines Lötverfahrens hermetisch verbunden werden. Die Dimensionierung der Anordnung ist so gewählt, dass eine möglichst spannungsfreie Struktur entsteht. Die Verbindungen E und F sind hermetisch dicht.

Um eine spannungsfreie Anordnung, und/oder beispielsweise eine gut haftende Versiegelung zu ermöglichen, wählt man für den metallischen Gegenstand 5 als Material beispielsweise Kovar aus. Jedoch ist auch eine andere Materialkombination denkbar, welche den Zweck der Spannungsfreiheit erfüllt. Ferner können Abschnitte 5 und 3 der Anordnung an den Verbindungspunkten E und F mit weiteren Materialien, wie Metall beschichtet werden, um einen für Lebensmittel tauglichen Sensor zu schaffen. Das Gehäuseelement 8 des Sensors kann z. B. mittels Laserpunktschweißen an den Abschnitt bzw. die Scheibe 5 geschweißt werden.

Figur 2 zeigt eine zweite Ausführungsform des erfindungsgemäßen Sensors, wobei gegenüber der ersten Ausführungsform die metallische Schicht 2, also die Kondensatorelektrode 2, auf der Innenseite der Zelle angeordnet ist. Weiterhin sind Kanten der Zelle, insbesondere der Halterungen 3 und 7 abgeschrägt. Diese Anordnung kann z. B. in der Lebensmittelindustrie eingesetzt werden. Wenn beispielsweise ein Lebensmittelstrom seitlich auf die Anordnung herangeführt wird, entstehen aufgrund der ansonsten senkrechten Fassaden hohe Strömungswiderstände, welche zu hohen Belastungen führen können. Durch die Abschrägungen werden diese Belastungen reduziert. Somit kann die gesamte Anordnung höheren seitlichen Drücken ausgesetzt werden. Die geometrische Dimensionierung der Anordnung kann so gewählt werden, um am Optimum für die industriellen Anforderungen im Einsatz dieser Drucksensoren zu ermöglichen. Die Metallisierungsschicht 2 ist innerhalb der Anordnung ausgebildet. Die Elektrode 2 bildet einen Teil eines Kondensators zur Messung des Druckes.

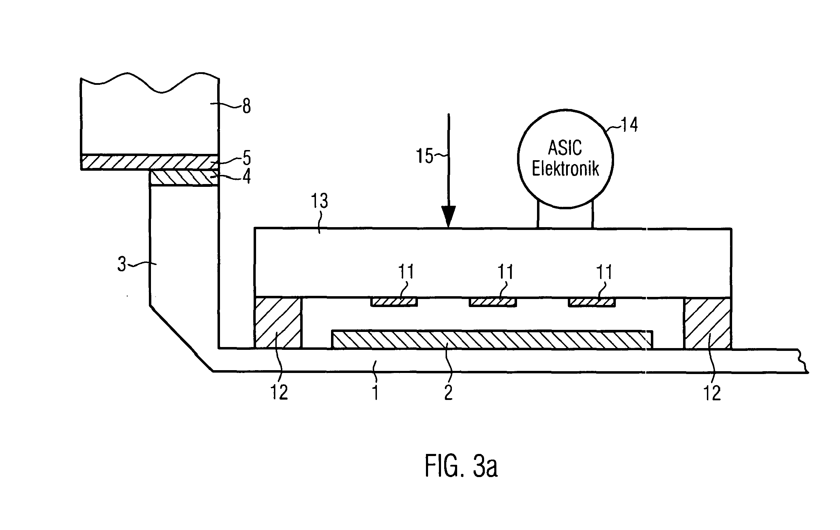

Figur 3a zeigt eine Detaildarstellung der zweiten Ausführungsform. Darin ist gezeigt wie Gegenelektroden 11 des Kondensators, welche auf einem Trägerelement (Trägerstück) 13, welches ebenfalls aus Keramik oder HTCC-Material hergestellt sein kann, angeordnet sind. Das Trägerstück 13 wird mittels einer Verbindungsmasse, die vorzugsweise aus Glas oder aus Glaslegierungen hergestellt wird, mit der Membran verbunden. Der Träger, der mittels Abstandselementen 12 aus einer Verbindungslegierung mit der Membran 1 verbunden ist, kann beispielsweise mittels einer Anordnung geführt werden, um einen Druck 15 auf die Membran zur Änderung der Kapazität des Kondensators zu ermöglichen. Der Träger 13 kann auch mittels einer hier nicht dargestellten Feinmechanik eingearbeitet sein, festgehalten sein und/oder positioniert werden. Die Positionierung kann mittels des Signals des Kondensators durchgeführt und kann sehr genau durchgeführt werden. Weiterhin kann eine Elektronik 14, z.B. als ein ASIC oder als mehrere ASICs ausgebildet, vorgesehen sein.

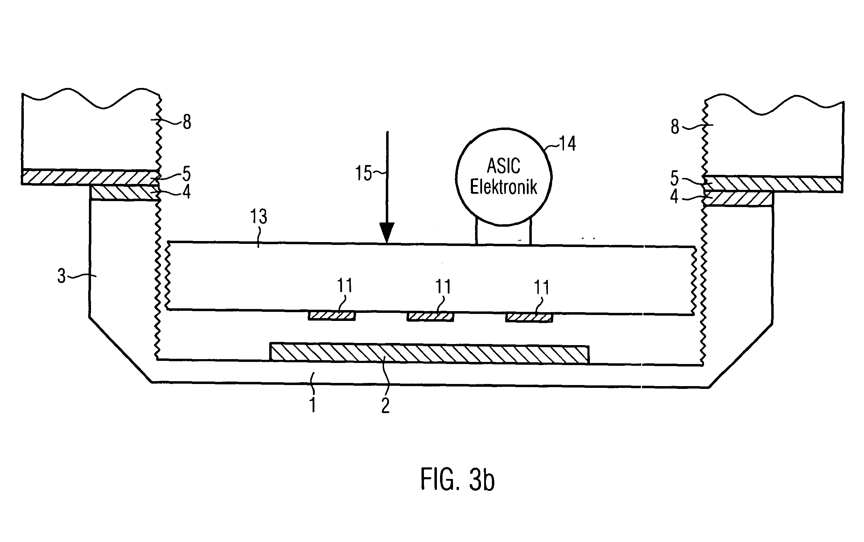

Eine in Figur 3b dargestellte Abwandlung der Ausführungsform nach Fig. 3B besteht darin, dass das Trägerstück 13 eine Justier- und/oder Positioniereinrichtung umfasst (z.B. ein Außengewinde aufweist, welches in ein Innengewinde der Halterungen 3 und 7 einschraubbar ist), wobei dann auf die Abstandselemente 12 verzichtet werden kann. Das Positionieren des Trägerelements 13 kann dabei vor oder nach dem fluiddichten Verbinden der Halterungen 3, 7 erfolgen, wobei im letzten Fall dann ggf. auch das Gehäuseelement ein Innengewinde aufweist.

>

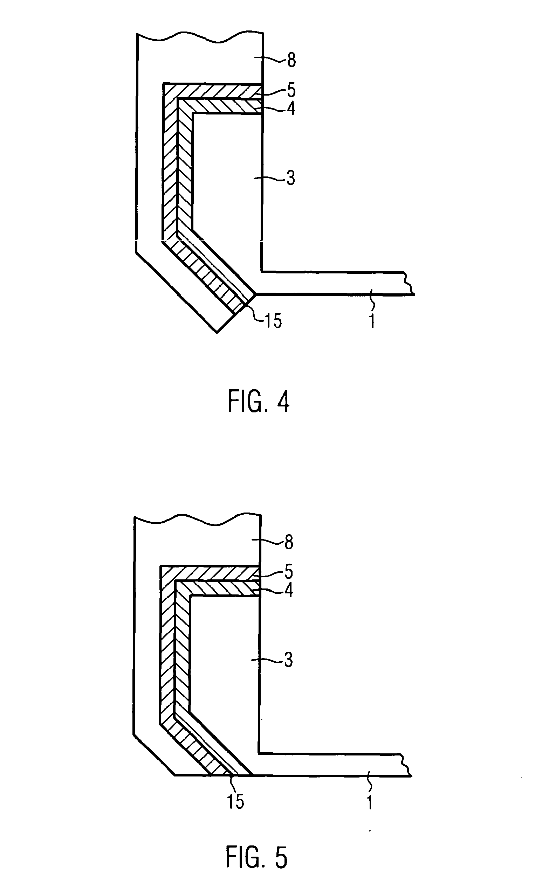

Figur 4 zeigt eine dritte Ausführungsform des erfindungsgemäßen Sensors, wobei eine Frontbündigkeit der Zelle / der Membran mit dem Gehäuse erzielt wird, indem die Zelle an ein Gehäuse 8 des Sensors mittels Anbringen einer Schweißnaht 15 durchgeführt wird, welche die Komponenten 4 und 5 miteinander verbindet. Insbesondere wird mittel Schweißen ebenfalls eine hermetische Abdichtung erzielt. Figur 5 zeigt eine vierte Ausführungsform des erfindungsgemäßen Drucksensors, welche im wesentlichen der dritten Ausführungsform entspricht und lediglich die Membran 1 des Zellenelements mit dem Gehäuseelement 8 des Zellenelements frontbündig ausgebildet ist.

Die hier beschriebenen Ausführungsformen stellen lediglich Beispiele der Erfindung dar, die in den nachfolgenden Patentansprüchen definiert ist.

## Patentansprüche

1. Sensor, insbesondere Drucksensor, für ein Fluid, insbesondere für eine Flüssigkeit, ein Gas oder ein viskoses Material, mit:
einem Gehäuseelement;
einem Zellenelement, dessen Material vorzugsweise Keramik umfasst; und
wenigstens einer Versiegelung zum fluiddichten Verbinden des Zellenelements mit dem Gehäuseelement.

2. Sensor gemäß Patentanspruch 1, wobei das Zellenelement eine keramische Membran umfasst.

3. Sensor gemäß Patentanspruch 2, wobei das Zellenelement wenigstens eine Halterung zum Haltern der Membran und/oder zum Positionieren der Membran relativ zum Gehäuseelement umfasst und wobei die wenigstens eine Versiegelung die wenigstens eine Halterung mit dem Gehäuseelement dicht verbindet.

4. Sensor gemäß Patentanspruch 3, wobei die wenigstens eine Halterung vorzugsweise aus dem gleichen Material und/oder einstückig mit der Membran ausgebildet ist.

5. Sensor gemäß einem der Patentansprüche 1 bis 4, wobei eine Seite der Membran mit einer ersten Kondensatorelektrode versehen ist.

6. Sensor gemäß einem der Patentansprüche 1 bis 5, wobei die wenigstens eine Versiegelung eine metallische Schicht, insbesondere Lot, einen Keramikkleber, einen durch UV-Licht härtbaren Kleber oder einen Glaskleber umfasst.

7. Sensor gemäß einem der Patentansprüche 1 bis 6, wobei die Membran und/oder das Zellenelement aus Hochtemperatur-Mehrlagenkeramik (HTCC) gefertigt sind/ist.

8. Sensor gemäß einem der Patentansprüche 1 bis 7, wobei das Gehäuseelement einen Abschnitt zum Verbinden mit dem Zellenelement aufweist, dessen Material Kovar umfasst.

9. Sensor gemäß einem der Patentansprüche 1 bis 8, wobei fluidseitige Begrenzungen des Zellenelements abgeschrägt und/oder abgerundet sind und/oder frontbündig mit dem Gehäuseelement ausgebildet sind.

10. Sensor gemäß einem der Patentansprüche 1 bis 9, wobei wenigstens eine zweite Kondensatorelektrode in einem fluidabgewandten Bereich des Zellenelements, und/oder in Kombination mit Patentanspruch 5 auf einer fluidabgewandten Seite der Membran angeordnet ist, wobei die wenigstens eine zweite Kondensatorelektrode auf einem Trägerelement angeordnet ist.

11. Sensor gemäß Patentanspruch 10, wobei das Trägerelement ein Außengewinde aufweist, welches in ein Gewinde des Gehäuseelements und/oder des Zellenelements einschraubbar ist und/oder wobei Abstandselemente zwischen dem Trägerelement und der Membran vorgesehen sind.

12. Verfahren zur Herstellung eines Sensors, insbesondere eines Drucksensors, für ein Fluid, insbesondere für eine Flüssigkeit, ein Gas oder ein viskoses Material, mit den Schritten:
Sintern eines keramischen Zellenelements mit einer Membran, wobei die Membran vorzugsweise auf einer Seite mit einer metallischen Schicht zur Ausbildung einer Elektrode gesintert und/oder metallisiert wird; und
fluiddichtes Versiegeln des Zellenelements mit einem Gehäuseelement des Sensors.

13. Verfahren nach Patentanspruch 12, mit dem weiteren Schritt:
Positionieren eines Trägerelements mit wenigstens einer Gegenelektrode relativ zur Membran, wobei das Positionieren vorzugsweise durch Einschrauben des Trägerelements in wenigstens eine Halterung oder durch Vorsehen von Abstandselementen zwischen dem Trägerelement und der Membran erfolgt.

14. Verfahren nach Anspruch 12 oder 13, mit dem weiteren Schritt:
Anordnen des Zellenelements so, dass eine fluidseitige Begrenzung des Zellenelements frontbündig mit dem Gehäuseelement ist.

15. Verfahren nach einem der Patentansprüche 12 bis 14, wobei das Versiegeln mittels Schweißen und/der Löten und/oder Kleben, und wobei das Versiegeln insbesondere ohne Anbringen einer Gummidichtung oder gummiartigen Dichtung erfolgt.
